# EUROPEAN PATENT SPECIFICATION

(11) **EP 1 371 786 B1**
(45) Date of publication and mention of the grant of the patent: **02.08.2006**
(21) Application number: 03011884.8
(22) Date of filing: 27.05.2003
(51) Int. Cl.: E02F 9/12, E02F 9/22, B66C 23/86

(54) **Hydraulic circuit for rotating cranes of lorries or mechanical arms of excavators and related method**
Hydraulikkreis für Drehkrane auf Lastkraftwagen und Ausleger von Baggern und die zugehörige Methode
Circuit hydraulique pour grues pivotantes montées sur un camion et pour bras d'excavatrices et procédé correspondant

(30) Priority: 13.06.2002 IT PR20020032
(43) Date of publication of application: 17.12.2003
(73) Proprietor: Bompieri, Renzo, 46040 Monzambano (Mantova) (IT)
(72) Inventor: Bompieri, Renzo, 46040 Monzambano (Mantova) (IT)
(74) Representative: Gotra, Stefano

(56) References cited:
- EP-B- 0 543 025
- DE-A- 19 503 943
- US-A- 4 571 941
- US-A- 4 644 849
- US-B1- 6 336 324
- PATENT ABSTRACTS OF JAPAN vol. 2000, no. 01, 31 January 2000 (2000-01-31) -& JP 11 269937 A (KOBE STEEL LTD;YUTANI HEAVY IND LTD), 5 October 1999 (1999-10-05)
- PATENT ABSTRACTS OF JAPAN vol. 012, no. 305 (M-733), 19 August 1988 (1988-08-19) -& JP 63 078930 A (HITACHI CONSTR MACH CO LTD), 9 April 1988 (1988-04-09)

## Description

The present invention relates to a hydraulic circuit for rotating cranes of lorries or mechanical arms of excavators.

The present invention further relates to a method for rotating cranes of lorries and/or mechanical arms of excavators of the type comprising the steps described in the preamble to claim 11.

As is well known, the cranes and/or the mechanical arms of lorries or excavators are normally driven by oleodynamic apparatuss in which flows a pressurised fluid which is sent to hydraulic actuators and whose flow is regulated by a plurality of valves slaved to one or more branches of delivery and return circuits within which the fluid flows.

The hydraulic actuators usually comprise a rack or a fifth wheel cinematically connected to the crane or to the mechanical arm.

Prior art apparatuss comprise a delivery circuit, whereto is slaved a regulating valve, of the kind technically called "over centre", driven by the hydraulic pressure in the branch of the delivery circuit.

The apparatus is provided with a unit for controlling and distributing the hydraulic fluid, which usually comprises at least a distributor with multiple positions, a pump and a tank for collecting the fluid.

Since the rotation of the crane or of the mechanical arm can take place in both directions, the delivery and return circuits are interchangeable, i.e. each of them operates both as a delivery circuit and as a return circuit.

This is because the hydraulic actuator, be it a rack or a fifth wheel, is symmetrical, i.e. it has a pair of chambers positioned at opposite parts relative to a movable cursor and connected respectively to the delivery circuit and to the return circuit. Each of said chambers can serve both as a chamber for loading the pressurised fluid, and as a chamber for discharging the fluid, allowing the actuator to move both in one direction and in the opposite one.

The delivery circuit regulating valve is opened by the pressure present in the delivery circuit, which is developed as a result of the delivery of fluid operated by the distributor on the operator's command.

The pressure present in the branch of the delivery circuit upstream of the regulating valve is also the driving pressure which commands the opening of the regulating valve slaved to the return circuit.

Clearly, inverting the delivery circuit with the return circuit also causes the driving pressures to be inverted.

Document US 4,644,849 shows an apparatus for locking of an inertial mass drive hydraulic circuit system having a hydraulic pump, an actuator driven by the hydraulic pump for driving a relatively large inertial mass, and a directional control valve mounted in line connecting the hydraulic pump with the actuator. An on-off device is interposed between the actuator and the hydraulic pump for opening or closing the line, and a sensor is provided for sensing the discharge condition of the hydraulic pump. The sensor generates a signal for actuating the on-off device.

Document JP 11269937 discloses a vibration damping device for working machine whose aim is to damp vibrations while securing the necessary responsiveness by setting appropriate feedback gains which match a lever control input.

A lever control input R and a revolving speed N are detected, and the difference between the inlet pressure and the outlet pressure of a revolving motor 2 is set by a differential pressure setting part 17 so that the deviation from the detected revolving speed N of a desired revolving speed Nr set by the desired speed setting part 16 of a main controller 14 and corresponding to the lever control input R is eliminated. Flow control valves 6, 6 are controlled so that the set differential pressure is obtained. At the differential pressure setting part 17, feedback gains are made variable in accordance with the lever control input R, and in a region wherein the lever control input R is small, the set differential pressure is increased to secure responsiveness; in a region wherein the lever control input is great, the gains are made smaller to prevent excessive response so as to damp vibrations.

The oleodynamic apparatuss summarily described above have an important drawback. Since the pressure of the delivery circuit is subject to oscillations, the regulating valve of the return circuit, driven by the pressure present in the delivery circuit, opens and shuts intermittently, causing a jerky rotation of the crane or of the mechanical arm.

An aim of the present invention is to eliminate the aforesaid drawback, making available a hydraulic circuit for rotating cranes of lorries or mechanical arms of excavators and a method, which allow to obtain this rotation in continuous, progressive fashion.

Another aim of the present invention is to propose a hydraulic circuit that is reliable and easy to build.

An additional aim of the present invention is to make available a hydraulic circuit that is able to absorb any pressure peaks, distributing them between the delivery and return circuits.

Said aims are fully achieved by the hydraulic circuit for rotating cranes of lorries or mechanical arms of excavators and by the related method, of the present invention, which are characterised by the contents of the claims set out below.

These and other aims shall become more readily apparent from the following description of a preferred embodiment illustrated, purely by way of non limiting example, in the accompanying drawing tables, in which:
- Figure 1 shows a function diagram of a first embodiment of a hydraulic circuit according to the invention;
- Figure 2 shows a function diagram of a second embodiment of a hydraulic circuit according to the invention.

With reference to the figures, the hydraulic circuit in question is globally designated with the number 1 and comprises a first hydraulic delivery/return line 2 for delivering pressurised fluid and a hydraulic rotation actuator 3. Said delivery return line 2 comprises a valve 4 for regulating the flow of fluid, movable between at least an operative position for allowing the passage of the fluid and an operative position for blocking it.

The hydraulic circuit 1 comprises a hydraulic delivery/return line 5 for returning fluid from the actuator 3.

This return line 5 also comprises a regulating valve 6, movable between at least an operative position for allowing the passage of the fluid and an operative position for blocking it. In the illustrated examples, both valves 4, 6 for regulating fluid flow are normally in blocking position.

Since the crane or the mechanical arm can rotate in both directions, the delivery/return line 2 and the delivery/return line 5 are interchangeable, i.e. each of them serves both as delivery circuit and as return circuit.

Therefore, the behaviour of the components slaved to the delivery/return circuit 2 is wholly identical to that of the components slaved to the delivery/return circuit 5.

The hydraulic circuit 1 comprises a unit 7 for controlling and distributing the pressurised fluid associated to the delivery Line 2 and to the return line 5. In particular, said unit 7 comprises at least a tank 7a, a pump 7b and a distributor 7c activated, manually or remotely, by an operator.

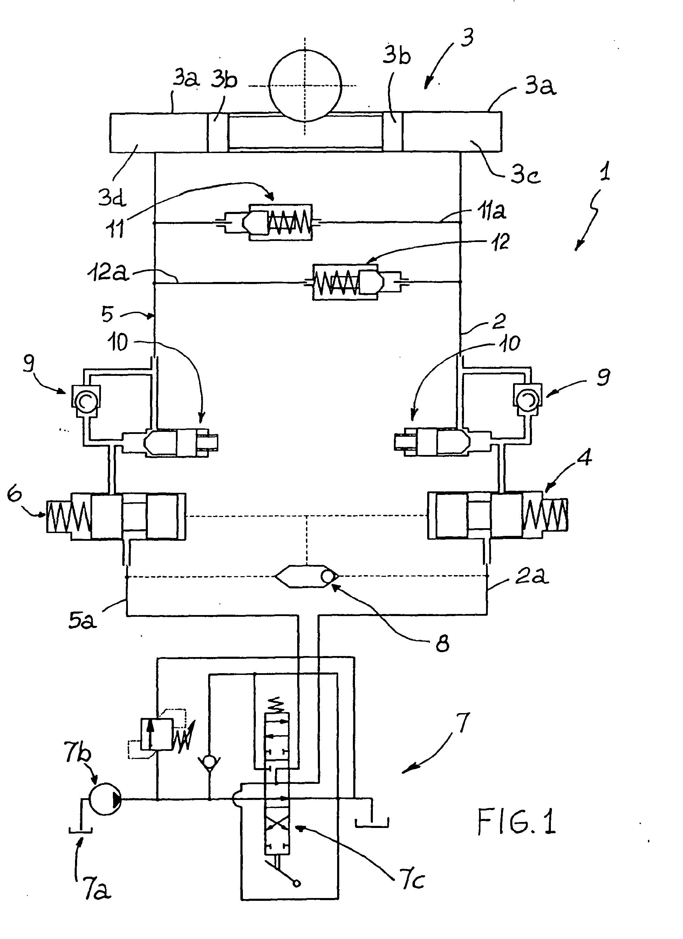

With particular reference to Figure 1, the hydraulic actuator 3 comprises a rack constituted by a cylinder 3a inside which slides a piston 3b. During its motion inside the cylinder, the piston defines a pair of chambers 3c, 3d of variable dimensions and located at opposite positions relative to the piston; said chambers are connected respectively to the delivery line 2 and to the return line 5 and each of them can serve both as a chamber for loading the pressurised fluid, and as a chamber for discharging the fluid, allowing the piston to move both in one direction and in the opposite one.

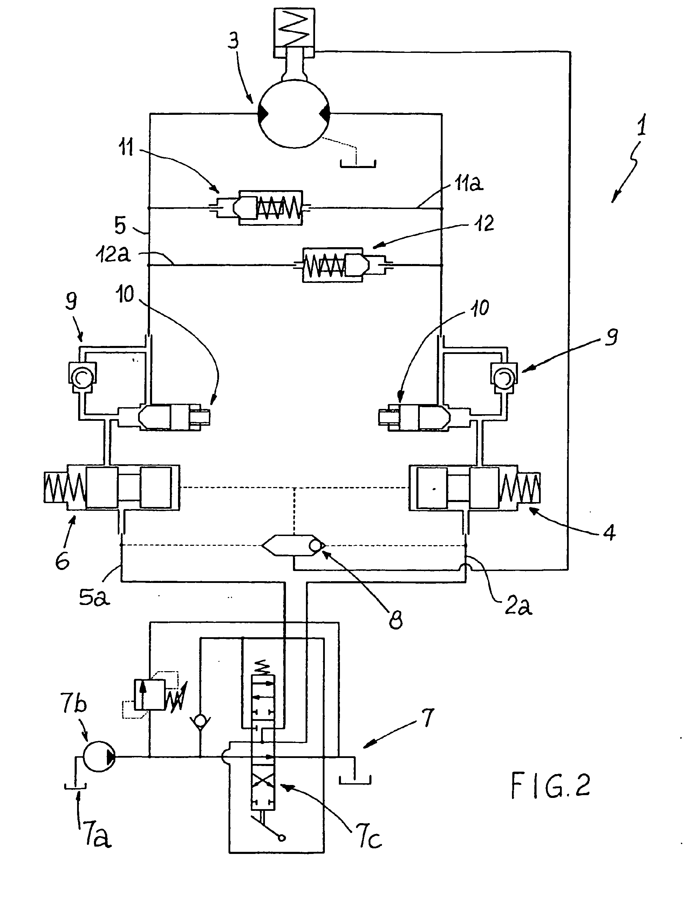

With particular reference to the embodiment illustrated in Figure 2, the hydraulic actuator 3 comprises a fifth wheel.

The hydraulic circuit 1 originally comprises a selector valve 8 operatively active on both the valves 4, 6 for regulating fluid flow in the delivery line 2 and in the return line 5, in order to drive the simultaneous opening of said valves during the rotation of the crane or of the mechanical arm.

In particular, the selector valve 8 is operatively connected to the delivery line 2 and to the return line 5 to be able to be driven by the pressure of the fluid present inside branches 2a, 5a of the aforesaid circuits, in particular between the regulating valves 4, 6 and the control and distribution unit 7.

The hydraulic circuit 1 further comprises means for controlling the velocity of rotation of the crane and of the mechanical arm.

In the illustrated examples, said means comprise at least a one-way valve 9 associated to at least a valve 10 with predetermined and variable choke. Said valves are positioned on the branches of the delivery line 2 and return line 5, between the flow regulating valve and the hydraulic rotation actuator.

The hydraulic circuit 1 is also provided with a pair of maximum pressure valves 11, 12 each of which is positioned on a corresponding branch 11a, 12a in branch-off connection from the delivery line 2 and return line 5.

The maximum pressure valves 11, 12 intervene in the presence of pressure peaks within a chamber of the hydraulic actuator 3, distributing the fluid between two chambers of the actuator itself.

Whether the hydraulic actuator 3 is a rack or a fifth wheel, it has a pair of chambers positioned opposite relative to a movable cursor and respectively connected to the delivery line and to the return line.

The method of the invention comprises the following steps:
- sending pressurised fluid to a hydraulic rotation actuator by means of a first hydraulic delivery/return line;
- retrieving the pressurised fluid returning from the hydraulic actuator by means of a second hydraulic delivery/return line.

The method originally comprises a step of simultaneously opening at least a pair of valves for regulating fluid flow. Said valves are positioned on corresponding delivery and return line and are movable between at least an operative position for allowing the passage of the fluid and an operative position for blocking it.

The operation of the invention is as follows.

An operator commands, manually or remotely, the control and fluid distribution unit 7, which sends pressurised fluid into the delivery line, for instance into the hydraulic line 2.

As soon as the fluid reaches the branch 2a of the delivery line 2, the selector valve 8 receives a pressure signal which commands it to open.

Subsequently, the selector valve 8 sends a pressure signal to the regulating valves 4, 6 to bring them to the operative position for allowing the passage of the fluid in the circuit.

Thereafter, the fluid flows in the delivery line 2 to the hydraulic actuator 3 which actuates the rotation of the crane or of the mechanical arm.

With particular reference to Figure 1, the fluid enters the chamber 3c of the cylinder 3a moving the piston 3b towards the other chamber 3d of the cylinder, wherefrom exits fluid which is collected in the return line 5.

Subsequently, the fluid flows through the valve 10 with choke, which controls, by means of head losses, the velocity of rotation of the crane or of the mechanical arm. In particular, the typical drawback of the prior art, i.e. a jerky rotation of the crane or of the mechanical arm, is eliminated.

The invention achieves important advantages.

First of all, the presence of the selector valve 8 allows to bring both regulating valve 4,6 to the consent position simultaneously, assuring a continuous and progressive rotation of the crane and/or of the mechanical arm.

Secondly, the maximum pressure valves 11, 12 enhance the reliability of the apparatus, because they allow the absorption of any pressure peaks which may cause ruptures in the fluid delivery and return lines.

## Claims

1. Hydraulic circuit (1) for rotating cranes of lorries or mechanical arms of excavators, comprising:
a hydraulic actuator (3) for rotating the crane or the mechanical arm and a source of pressurised fluid (7b);
at least a first hydraulic delivery/return line (2) couplable to a first side of the actuator (2), a first regulating valve (4) connected to said first hydraulic delivery/return line (2), the first regulating valve (4) movable between at least an operating position for allowing the passage of a fluid and an operative position for blocking it;
at least a second hydraulic delivery/return line (5) couplable to a second side of the actuator (2), a second regulating valve (6) connected to said second hydraulic delivery/return line (5), the second regulating valve (6) movable between at least an operating position for allowing the passage of a fluid and an operative position for blocking it;
at least a unit (7) for controlling the pressurised fluid from said source and distributing same to the associated first and second hydraulic delivery/return lines (2,5),
the hydraulic circuit further comprising a selector valve (8) connected to the first hydraulic delivery/return line (2) and to the second hydraulic delivery/return line (5) for regulating the flow in said first and second hydraulic delivery/return lines (2,5), the selector valve (8) simultaneously driving said regulating valves (4,6) so as to allow the passage of fluid therethrough, **characterized in that** the hydraulic circuit further comprises means (9, 10) for controlling the velocity of rotation of the crane or of the mechanical arm positioned on branches of the first delivery/return line (2) and of the second delivery/return line (5), between the first and second valves (4;6) for regulating the flow and the hydraulic actuator (3) of rotation.

2. Hydraulic circuit as claimed in claim 1, **characterised in that** the selector valve (8) is operatively connected to the first delivery/return line (2) and to the second delivery/return line (5) to be able to be driven by the pressure of the fluid present inside said lines.

3. Hydraulic circuit as claimed in claim 1, **characterised in that** the means for controlling the velocity of rotation comprise at least a one-way valve (9) associated to at least a valve (10) with predetermined and variable choke.

4. Hydraulic circuit as claimed in claim 1, **characterised in that** it comprises at least a pair of maximum pressure valves (11; 12), each of which is positioned on a corresponding branch (11a; 12a) in branch-off connection from the first delivery/return line (2) and from the second delivery/return line (5).

5. Hydraulic circuit as claimed in claim 1, **characterised in that** the hydraulic actuator (3) of rotation comprises a rack.

6. Hydraulic circuit as claimed in claim 1, **characterised in that** the hydraulic actuator (3) of rotation comprises a fifth wheel.

7. Hydraulic circuit as claimed in claim 1, **characterised in that** regulating valves (4;6) of the first delivery/return line (2) and of the second delivery/return line (5) are normally in the blocking operative position.

8. Hydraulic circuit as claimed in claim 1, **characterised in that** the first delivery/return line (2) and the second delivery/return line (5) are interchangeable.

9. Lorry and/or excavator, **characterised in that** it comprises a hydraulic circuit (1) as claimed in any of the previous claims.

10. Method for rotating cranes of lorries and/or mechanical arms of excavators of the type comprising the steps of:
sending pressurised fluid to a hydraulic actuator (3) of rotation by means of a first hydraulic delivery return line (2);
retrieving the pressurised fluid returning from the hydraulic actuator (3) by means of a second hydraulic delivery/return line (5),
simultaneously opening at least a pair of valves (4;6) for regulating fluid flow, said valves (4;6) being positioned on the first delivery/return line (2) and second delivery/return line (5) and being movable between at least an operative position for allowing the passage of the fluid and an operative position for blocking it **characterised in that** it comprises a step of controlling the velocity of rotation of the crane or mechanical arm by means (9, 10) positioned on branches of the first delivery/return line (2) and second delivery/return line (5), between the first and second valves (4, 6) for regulating the flow and the hydraulic actuator (3).

## Patentansprüche

1. Hydraulikkreis (1) für Drehkrane auf Lastkraftwagen oder Ausleger von Baggern umfassend:
einen hydraulischen Arbeitszylinder (3) zum Drehen des Krans oder Auslegers und eine Druckmittelquelle (7b);
mindestens eine erste Zulauf-/Rücklaufleitung (2), die an einer ersten Seite des Arbeitszylinders (2) anschliessbar ist,
ein erstes, mit der genannten ersten hydraulischen Zulauf-/Rücklaufleitung (2) verbundenes Regelventil (4), wobei das erste Regelventil (4) zwischen mindestens einer Betriebsstellung, in der es den Durchfluss eines Mittels zulässt, und einer Betriebsstellung, in der es diesen sperrt, verfahrbar ist;
mindestens eine zweite hydraulische Zulauf-/Rücklaufleitung (5), die an einer zweiten Seite des Arbeitszylinders (2) anschliessbar ist, ein mit der genannten zweiten hydraulischen Zulauf-/Rücklaufleitung (5) verbundenes zweites Regelventil (6), welches zweite Regelventil (6) zwischen mindestens einer Betriebsstellung, in der es den Durchfluss eines Mittels zulässt, und einer Betriebsstellung, in der es diesen sperrt, verfahrbar ist;
mindestens eine Einheit (7), welche das von der genannten Quelle kommende druckbeaufschlagte Mittel steuert und auf zugeordnete erste und zweite hydraulische Zulauf-/Rücklaufleitungen (2, 5) verteilt,
wobei der Hydraulikkreis ferner ein Wechselventil (8) umfasst, das mit der ersten hydraulischen Zulauf-/Rücklaufleitung (2) und der zweiten hydraulischen Zulauf-/Rücklaufleitung (5) verbunden ist, und der Durchflussregulierung in den genannten ersten und zweiten hydraulischen Zulauf-/und Rücklaufleitungen (2,5) dient, wobei das Wechselventil (8) gleichzeitig die genannten Regelventile (4,6) antreibt, um den Durchfluss durch dieselben freizugeben, **dadurch gekennzeichnet, dass** der Hydraulikkreis ferner Mittel (9,10) zum Steuern der Drehgeschwindigkeit des Krans oder Auslegers umfasst, welche an Abzweigungen der ersten Zulauf-/Rücklaufleitung (2) und der zweiten Zulauf-/Rücklaufleitung (5) zwischen dem ersten und zweiten Ventil (4;6) zur Durchflussregulierung und dem hydraulischen Arbeitszylinder zum Drehen (3) angeordnet sind.

2. Hydraulikkreis nach Anspruch 1, **dadurch gekennzeichnet, dass** das Wechselventil (8) mit der ersten Zulauf-/Rücklaufleitung (2) und der zweiten Zulauf-/Rücklaufleitung (5) wirkverbunden ist, so dass es durch den Druck des in den genannten Leitungen enthaltenen Mittels angetrieben wird.

3. Hydraulikkreis nach Anspruch 1, **dadurch gekennzeichnet, dass** die Mittel zum Steuern der Drehgeschwindigkeit mindestens ein Einwegeventil (9) umfassen, das mindestens einem Ventil (10) mit vorbestimmter und veränderlicher Drosselung zugeordnet ist.

4. Hydraulikkreis nach Anspruch 1, **dadurch gekennzeichnet, dass** er zumindest ein Paar Ventile zur Begrenzung des maximalen Druckes (11;12) umfasst, welche jeweils an einer entsprechenden Abzweigung (lla; 12a) in ableitender Verbindung mit der ersten Zulauf-/Rücklaufleitung (2) und der zweiten Zulauf-/Rücklaufleitung (5) angeordnet sind.

5. Hydraulikkreis nach Anspruch 1, **dadurch gekennzeichnet, dass** der hydraulische Arbeitszylinder zum Drehen (3) eine Zahnstange umfasst.

6. Hydraulikkreis nach Anspruch 1, **dadurch gekennzeichnet, dass** der hydraulische Arbeitszylinder zum Drehen (3) einen Drehsattel umfasst.

7. Hydraulikkreis nach Anspruch 1, **dadurch gekennzeichnet, dass** sich die Regelventile (4;6) der ersten Zulauf-/Rücklaufleitung (2) und der zweiten Zulauf-/Rücklaufleitung (5) normalerweise in der sperrenden Betriebsstellung befinden.

8. Hydraulikkreis nach Anspruch 1, **dadurch gekennzeichnet, dass** die erste Zulauf-/Rücklaufleitung (2) und die zweite Zulauf-/Rücklaufleitung (5) austauschbar sind.

9. Lastkraftwagen bzw. Bagger, **dadurch gekennzeichnet, dass** er einen Hydraulikkreis (1) nach einem der vorhergehenden Ansprüche umfasst.

10. Verfahren zum Drehen von Kranen auf Lastkraftwagen bzw. Auslegern von Baggern der Art umfassend folgende Schritte:
Versorgen eines hydraulischen Arbeitszylinders zum Drehen (3) mit druckbeaufschlagtem Mittel mithilfe einer ersten hydraulischen Zulauf-/Rücklaufleitung (2) ;
Rückgewinnen des von dem hydraulischen Arbeitszylinders (3) rückströmenden druckbeaufschlagten Mittels mithilfe einer zweiten hydraulischen Zulauf-/Rücklaufleitung (5),
gleichzeitiges Öffnen zumindest eines Ventilpaars (4;6) zur Durchflussregulierung, wobei die genannten Ventile (4;6) an der ersten Zulauf-/Rücklaufleitung (2) und der zweiten Zulauf/Rücklaufleitung (5) angeordnet sind und zwischen mindestens einer Betriebsstellung, in der sie den Durchfluss des Mittels zulassen, und einer Betriebsstellung, in der sie diesen versperren, verfahrbar sind,
**dadurch gekennzeichnet, dass** sie einen Schritt zum Überwachen der Drehgeschwindigkeit des Krans oder Auslegers mithilfe von Mitteln (9; 10) umfasst, die an Abzweigungen der ersten Zulauf-/Rücklaufleitung (2) und zweiten Zulauf-/Rücklaufleitung (5), zwischen den ersten und zweiten Durchflussregulierventilen (4,6) und dem hydraulischen Arbeitszylinder (3) angeordnet sind.

## Revendications

1. Circuit hydraulique (1) pour grues pivotantes montées sur un camion ou pour bras mécaniques d'excavatrices, comprenant:
un actionneur hydraulique (3) pour faire pivoter la grue ou le bras mécanique et une source de fluide pressurisé (7b);
au moins une première ligne hydraulique d'alimentation/retour (2) pouvant être accouplée à un
premier côté de l'actionneur (3), une première valve de régulation (4) connectée à ladite ligne hydraulique d'alimentation/retour (2), la première valve de
régulation (4) étant mobile entre une position opérationnelle permettant le passage d'un fluide et une position opérationnelle le bloquant;
au moins une seconde ligne hydraulique d'alimentation/retour (5) pouvant être accouplée à un
second côté de l'actionneur (2), une seconde valve de régulation (6) connectée à ladite ligne hydraulique d'alimentation/retour (5), la seconde valve de régulation (6) étant mobile entre au moins une position opérationnelle permettant le passage d'un fluide et une position opérationnelle le bloquant;
au moins une unité (7) de contrôle du fluide pressurisé provenant de ladite source et distribuant ce dernier aux lignes hydrauliques d'alimentation/retour (2, 5) associées,
le circuit hydraulique comprenant en outre une valve de sélection (8) connectée à la première ligne hydraulique d'alimentation/retour (2) et à la seconde ligne
hydraulique d'alimentation/retour (5) pour réguler le flux dans lesdites première et seconde lignes d'alimentation/retour (2, 5), la valve de sélection (8) commandant simultanément lesdites valves de régulation (4, 6) de manière à permettre le passage du fluide au travers de ces dernières,
**caractérisé en ce que** le circuit hydraulique comprend de plus des moyens (9, 10) de contrôle de la vitesse de rotation de la grue ou du bras mécanique positionnés sur des branches de la première ligne hydraulique d'alimentation/retour (2) et de la seconde ligne hydraulique d'alimentation/retour (5), entre les premières et secondes valves (4, 6) de régulation du flux et l'actionneur hydraulique (3) de rotation.

2. Circuit hydraulique selon la revendication 1, **caractérisé en ce que** la valve de sélection (8) est opérationnellement connectée à la première ligne d'alimentation/retour (2) et à la seconde ligne d'alimentation/retour (5) pour pouvoir être commandée par la pression du fluide présent à l'intérieur desdites lignes.

3. Circuit hydraulique selon la revendication 1, **caractérisé en ce que** les moyens de contrôle de la vitesse de rotation comprennent au moins une valve à simple effet (9) associée à au moins une valve (10) avec un étranglement prédéterminé et variable.

4. Circuit hydraulique selon la revendication 1, **caractérisé en ce qu'**il comprend au moins une paire de valves de pression maximum (11, 12), chacune desquelles est positionnée sur une branche (lla, 12a) correspondante dans une connexion de bifurcation partant de la première ligne d'alimentation/retour (2) et de la seconde ligne d'alimentation/retour (5).

5. Circuit hydraulique selon la revendication 1, **caractérisé en ce que** l'actionneur hydraulique (3) de rotation comprend une crémaillère.

6. Circuit hydraulique selon la revendication 1, **caractérisé en ce que** l'actionneur hydraulique (3) de rotation comprend une cinquième roue.

7. Circuit hydraulique selon la revendication 1, **caractérisé en ce que** les valves de régulation (4, 6) de la première ligne d'alimentation/retour (2) et de la seconde ligne d'alimentation/retour (5) sont normalement dans la position opérationnelle de blocage.

8. Circuit hydraulique selon la revendication 1, **caractérisé en ce que** la première ligne d'alimentation/retour (2) et la seconde ligne d'alimentation/retour (5) sont interchangeables.

9. Camion et/ou excavatrice, **caractérisés en ce qu'**ils comprennent un circuit hydraulique (1) selon n'importe laquelle des revendications précédentes.

10. Procédé pour grues pivotantes sur un camion et/ou bras mécaniques d'excavatrices, du type comprenant les phases de:
envoi d'un fluide pressurisé vers un actionneur hydraulique (3) de rotation au moyen d'une première ligne hydraulique d'alimentation/retour (2);
récupération du fluide pressurisé revenant de l'actionneur hydraulique (3) au moyen d'une seconde ligne hydraulique d'alimentation/retour (5), en ouvrant simultanément au moins une paire de valves (4, 6) de régulation dudit fluide, lesdites valves (4, 6) étant positionnées sur la première ligne d'alimentation/retour (2) et sur la seconde ligne d'alimentation/retour (5) et étant mobiles entre au moins une position opérationnelle permettant le passage du fluide et une position opérationnelle pour le bloquer;
**caractérisé en ce qu'**il comprend la phase de contrôle de la vitesse de rotation de la grue ou du bras mécanique par des moyens (9, 10) positionnés sur des branches de la première ligne d'alimentation/retour (2) et de la seconde ligne d'alimentation/retour (5), entre les premières et secondes valves (4, 6) de régulation du flux et l'actionneur hydraulique (3).
